(19)

Europäisches
Patentamt
European
Patent Office
Office européen
des brevets

(11)  **EP 2 787 513 A1**

(12)  **EUROPEAN PATENT APPLICATION**
published in accordance with Art. 153(4) EPC

(43) Date of publication:
**08.10.2014 Bulletin 2014/41**

(21) Application number: **13770376.5**

(22) Date of filing: **28.02.2013**

(51) Int Cl.:
*H01B 17/56* (2006.01)  *C08J 9/26* (2006.01)
*H01B 3/30* (2006.01)  *H01B 3/42* (2006.01)
*H01B 17/60* (2006.01)

(86) International application number:
**PCT/JP2013/055272**

(87) International publication number:
**WO 2013/146053 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2012  JP 2012076821**

(71) Applicant: **Nitto Denko Corporation**
**Ibaraki-shi, Osaka 567-8680 (JP)**

(72) Inventors:
• **IKENAGA, Hiroko**
**Ibaraki-shi**
**Osaka 567-8680 (JP)**

• **KASAGI, Tomoyuki**
**Ibaraki-shi**
**Osaka 567-8680 (JP)**
• **YAKUWA, Shinpei**
**Ibaraki-shi**
**Osaka 567-8680 (JP)**
• **AKIYAMA, Keiko**
**Ibaraki-shi**
**Osaka 567-8680 (JP)**

(74) Representative: **Sajda, Wolf E. et al**
**Meissner, Bolte & Partner GbR**
**Postfach 86 06 24**
**81633 München (DE)**

(54)  **ELECTRICALLY INSULATING RESIN SHEET**

(57)  An object of the present invention is to provide an electrically insulating resin sheet which is excellent in heat resistance and insulating properties and is able to maintain a predetermined shape even after applying an external force to the sheet to deform the sheet into a predetermined shape and removing the external force.

An electrically insulating resin sheet having a porosity of 10 to 60 %, a stress relaxation ratio of 20 % or more when the sheet is extended by 5 % at 23 °C, and maintained for 10 minutes, and an insulation breakdown voltage of 25 kV/mm or more.

EP 2 787 513 A1

**Description**

TECHNICAL FIELD

The present invention relates to an electrically insulating resin sheet, particularly an electrically insulating resin sheet used as an electrical insulator for motor coils.

BACKGROUND ART

In equipments such as motors, generators, and transformers, polyethylene terephthalate (PET) films have been most commonly used as insulators such as an insulator to the earth (slot, spacer, wedge, etc.), an interlayer insulator (between coil layers, etc.), and a conductor insulator.

In particular, in equipments such as high voltage AC motors, industrial DC motors, and generators, a demand of heat resistance has been increasing from the trend of high-voltage, large capacity, and reduction in size and weight, and a film made of super engineering plastics such as polyimide (PI), polysulfone (PSF), polyethersulfone (PES), polyetherimide (PEI), polyphenylene sulfide (PPS), and polyether ether ketone (PEEK), all of which are ranked as a class H insulator, has been used.

An electrically insulating resin sheet for motors has been known as an insulator used for achieving the insulation between coil wires or between a coil wire and an iron core in a motor. The electrically insulating resin sheet is sometimes used in a state where deformation such as bending is applied in order to adapt it to the shape of an object to be attached.

For example, in Patent Document 1, a technique of providing a cut portion formed perpendicular to a folding line on an end of a folded back insulating film has been proposed in order to reduce the deflection on the end of a folded back insulating film.

However, in the case of providing a cut portion in the insulating film, an insulation deterioration in the cut portion is concerned.

Further, even when deformation is caused by applying an external force to a conventional insulating film in a shape corresponding to the shape of an object to be attached, the shape of the insulating film cannot be maintained when removing the external force afterwards. Therefore, when attaching the insulating film so as to correspond to the shape of an object to be attached, it is necessary to first deform the insulating film so as to correspond to the shape of an object and attach the insulating film to the object afterwards while maintaining the deformation state with jigs or the like.

However, in the case of the attaching method described above, the jigs or the like become a hindrance depending on the shape of the object, and it becomes difficult to attach the insulating film to the object. There is also a problem such that the working efficiency is lowered because a lot of effort is required in the attachment operation. In addition, there is a problem of a reduction in the accuracy of attachment (such as accuracy of attachment position).

PRIOR ART DOCUMENTS

PATENT DOCUMENTS

Patent Document 1: JP-A-2003-9447

SUMMARY OF THE INVENTION

PROBLEMS TO BE SOLVED BY THE INVENTION

The present invention has been made in view of the above problems, and an object of the present invention is to provide an electrically insulating resin sheet which is excellent in heat resistance and insulating properties and is able to maintain a predetermined shape even after applying an external force to the sheet to deform the sheet into a predetermined shape and removing the external force.

The present invention relates to an electrically insulating resin sheet having a porosity of 10 to 60 %, a stress relaxation ratio of 20 % or more when the sheet is extended by 5 % at 23 °C and maintained for 10 minutes, and an insulation breakdown voltage of 25 kV/mm or more.

In order to obtain an electrically insulating resin sheet having class H heat resistance, it is necessary that the resin (polymer) as a raw material has a high glass transition temperature (Tg) and the main chain skeleton is rigid. Moreover, a certain thickness is required to maintain the insulating properties of the electrically insulating resin sheet. Therefore, a conventional electrically insulating sheet having high heat resistance and high insulating properties is considered to be difficult in bending and easy to return to its original shape even if it is bent.

The inventors of the present invention have found that an electrically insulating resin sheet which can maintain a predetermined shape even after removing an external force can be obtained, without reducing heat resistance and insulating properties, by adjusting the porosity of the sheet to 10 % to 60 % and further adjusting the stress relaxation ratio to 20 % or more when the sheet is extended by 5 % at 23 °C and maintained for 10 minutes.

If the porosity of the sheet is less than 10 %, the sheet can hardly bend due to its high rigidity and even if the sheet is bent, the sheet is likely to return to its original shape upon removing the external force. Therefore, attachment of the insulating film to an object may become difficult, and the attachment accuracy decreases. In addition, it becomes difficult to lower the relative permittivity. On the other hand, when the porosity of the sheet exceeds 60 %, there is a possibility that the insulating properties of the sheet are significantly reduced.

Further, if the stress relaxation ratio is less than 20 %, the stress when the sheet is bent is not sufficiently relaxed and thus the sheet can be easily returned to its original shape upon removing the external force. Therefore, attachment of the insulating film to an object may become difficult, and the attachment accuracy decreases.

Further, it is necessary that the electrically insulating resin sheet has an insulation breakdown voltage of 25 kV/mm or more. If the insulation breakdown voltage of the electrically insulating resin sheet is 25 kV/mm or more, insulation breakdown due to the surge voltage can be prevented effectively at the time of using the sheet as an insulating material for equipments such as motors.

Further, the electrically insulating resin sheet has preferably a porous structure having an average cell diameter of 10 $\mu$m or less. If the average cell diameter exceeds 10 $\mu$m, there is a possibility that a crack occurs due to a reduction in the strength of the sheet at the time of its bending to result in impairment of insulating property. Further, it becomes difficult to lower a relative permittivity, and mechanical strength tends to decrease.

In addition, the electrically insulating resin sheet has preferably a relative permittivity of 2.5 or less at a frequency of 1 GHz. If the relative permittivity is 2.5 or less, it is possible to effectively prevent the insulation breakdown due to surge voltage when the electrically insulating resin sheet is used as an insulating member for equipments such as motors, because the partial discharge inception voltage that is the initial phenomenon of insulation breakdown can be increased. If the relative permittivity exceeds 2.5, the partial discharge inception voltage cannot be increased sufficiently.

Further, the electrically insulating resin sheet contains preferably a thermoplastic resin having a glass transition temperature of 150 °C or higher. The thermoplastic resin is advantageous for the formation of a porous structure because it has a plasticity. In addition, if the glass transition temperature of the thermoplastic resin is 150 °C or higher, it is possible to obtain an electrically insulating resin sheet having class H heat resistance.

In addition, the thermoplastic resin as a raw material for the electrically insulating resin sheet has preferably a tensile stress at break of 50 MPa or more and a tensile modulus of 1000 MPa or more. This makes it possible to prevent cracking at the bending line portion during bending processing.

The thermoplastic resin is preferably polyetherimide, polyethersulfone, or a mixture thereof. These resins have excellent dimensional stability at high temperatures and high durability for a long period of time.

The electrically insulating resin sheet of the present invention is suitably used as an electrical insulator for motor coils.

Also, the present invention relates to an electrically insulating laminated sheet comprising the electrically insulating resin sheet and a sheet material laminated on at least one surface of the electrically insulating resin sheet.

EFFECT OF THE INVENTION

The electrically insulating resin sheet of the present invention not only has excellent heat resistance and insulating properties, but can also maintain a predetermined shape even if an external force is applied to the sheet to deform the sheet into the predetermined shape and then the external force is removed. Therefore, the electrically insulating resin sheet can be deformed (such as bending) so as to correspond to the shape of an object and can maintain its deformed state, so that the electrically insulating resin sheet can be attached easily and accurately to the object without holding the sheet with jigs or the like.

BRIEF DESCRIPTION OF THE DRAWING

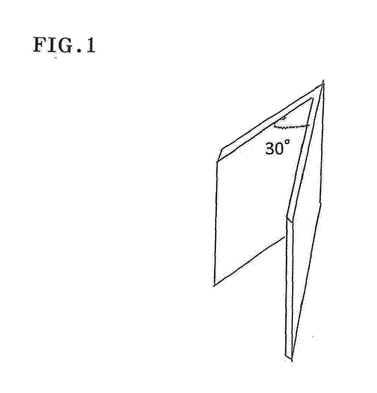

Fig. 1    is a perspective view of a metal plate that is bent to an angle of 30° (shape imitating a portion for attaching an electrically insulating resin sheet to a motor).

MODE FOR CARRYING OUT THE INVENTION

Embodiments of the present invention will be described below.

A resin as a raw material for an electrically insulating resin sheet according to the present invention is not particularly limited, but a thermoplastic resin is preferably used. The thermoplastic resin having a glass transition temperature of 150 °C or higher is preferable, and the thermoplastic resin having a glass transition temperature of 180 °C or higher is more preferable from the viewpoint of heat resistance.

Examples of such a thermoplastic resin include polyamide, polycarbonate, polybutylene terephthalate, polyethylene terephthalate, polyphenylene sulfide, polyarylate, polysulfone, polyether sulfone, polyether ether ketone, polyamideimide, polyimide, liquid crystal polymer, polyether imide, and the like.

These may be used either alone or in combination with two or more kinds thereof. Of these, polyetherimide, polyethersulfone, or a mixture thereof is preferably used because these resins have excellent dimensional stability at high temperatures and high durability for a long period of time.

The polyetherimide can be obtained by the dehydrative cyclization reaction between a diamino compound and an aromatic bisether anhydride such as 2,2',3,3'-tetracarboxydiphenylene ether dianhydride, but commercially available products, for example, ULTEM resin (manufactured by SABIC) and SUPERIO resin (manufactured by Mitsubishi Plastics, Inc.) may be used.

The diamino compound includes, for example, m-phenylenediamine, p-phenylenediamine, 3,4'-diaminodiphenyl ether, 4,4'-diaminodiphenyl ether, 4,4'-diaminodiphenyl sulfone, 3,3'-diaminodiphenyl sulfone, 2,2-bis(4- aminophenoxyphenyl)propane, 2,2-bis(4- aminophenoxypheny)hexafluoropropane, 1,3-bis(4- aminophenoxy)benzene, 1,4-bis(4-aminophenoxy)benzene, 2,4- diaminotoluene, 2,6-diaminotoluene, diaminodiphenylmethane, 4,4'-diamino-2,2-dimethylbiphenyl, 2,2- bis(trifluoromethyl)-4,4'-diaminobiphenyl, and the like. These may be used alone or in combination with two or more kinds thereof.

The polyether sulfone can be obtained by polycondensation reaction of dichlorodiphenyl sulfone with potassium salt of dihydroxydiphenyl sulfone, but commercially available products, e.g., ULTRASONE E series (manufactured by BASF Corp.), RADEL A-series (manufactured by Solvay S.A.) may be used.

The thermoplastic resin used in the present invention preferably has a tensile stress at break of 50 MPa or more and a tensile modulus of 1000 MPa or more. The tensile stress at break is more preferably 80 MPa or more and especially preferably 100 MPa or more (usually 200 MPa or less). The tensile modulus is more preferably 2000 MPa or more and especially preferably 3000 MPa or more (usually 5000 MPa or less).

The electrically insulating resin sheet may contain various additives in addition to the resin. The kind of such additives is not particularly limited and includes general additives for plastics, such as tackifying resins, flame retardants, antioxidants, inorganic fillers, foaming nucleators, crystal nucleators, heat stabilizers, light stabilizers, ultraviolet absorbers, plasticizers, lubricants, pigments, crosslinking agents, crosslinking aids, and silane coupling agents. These additives can be used in an amount of, for example, 0.1 to 5 parts by weight per 100 parts by weight of the resin.

The electrically insulating resin sheet of the present invention can be obtained by converting a resin composition containing the resin and the optional additive into a porous product. A method of making a porous product is not particularly limited, and examples thereof include a method for making pores mechanically, a method for decomposing the resin by heat or light, a chemical foaming method, and a physical foaming method. In order to obtain an electrically insulating resin sheet having a low relative permittivity, it is necessary to uniformly form micro cells with a high porosity.

For this purpose, either (1) a method of foaming with use of a non-reactive gas or (2) a method of extracting a phase separation agent that has been phase-separated in a resin is preferable. In these methods, since the reaction residue resulting from the foaming agent used in the case of chemical foaming method does not remain and the bubble becomes an independent cell structure, there is an advantage such that variations in electrical characteristics due to moisture absorption are less likely to occur.

Hereinafter, the method of foaming with use of a non-reactive gas mentioned above under item (1) will be described.

The electrically insulating resin sheet of the present invention can be produced, for example, by impregnating a non-reactive gas into a thermoplastic resin composition containing a thermoplastic resin under pressure (gas impregnation step) and foaming the thermoplastic resin composition by reducing the pressure after the gas impregnation step (foaming step).

Examples of the non-reactive gas used in the gas impregnation step include carbon dioxide, nitrogen gas, and air. These gases may be used alone or may be used as a mixture thereof. Of these, carbon dioxide is preferably used because its impregnation amount into the thermoplastic resin is large and its impregnation rate is fast.

Depending on the kinds of the non-reactive gases, the kinds of the thermoplastic resins or the thermoplastic resin compositions, the average cell diameter or the porosity of the target electrically insulating resin sheet, it is necessary to appropriately adjust the pressure and temperature at the time of impregnating the non-reactive gas. For example, in the case where carbon dioxide is used as the non-reactive gas and a polyetherimide is used as the thermoplastic resin, the temperature and the pressure are usually 20 °C to 230 °C and 7.3 MPa to 100 MPa, preferably 25 °C to 200 °C and 10 MPa to 50 MPa.

The non-reactive gas is preferably in a supercritical state from the viewpoint of promoting the rate of impregnation of the non-reactive gases into the thermoplastic resin. For example, in the case of carbon dioxide, the critical temperature is 31 °C and the critical pressure is 7.4 MPa, and when carbon dioxide is brought to a supercritical state wherein the temperature is 31 °C or higher and the pressure is 7.4 MPa or higher, the solubility of carbon dioxide in the thermoplastic resin is significantly increased and carbon dioxide can thereby be incorporated into the thermoplastic resin to a higher concentration.

Further, since the gas concentration in the thermoplastic resin is high when the gas in a supercritical state is impregnated, a larger number of cell nuclei are generated upon abrupt pressure drop and these cell nuclei can be grown up, resulting in higher cell density, thereby to obtain very minute cells.

The foaming step is a step of foaming a thermoplastic resin composition by reducing the pressure after the gas impregnation step. By reducing the pressure, cell nuclei are generated in a large amount in the thermoplastic resin composition. The degree of decrease in the pressure (decompression rate) is not particularly limited, but the rate is approximately 5 MPa/sec to 400 MPa/sec.

There may be provided a heating step of heating a porous structure wherein cell nuclei are formed by a foaming step, at a temperature of 150 °C or higher. By heating the porous structure in which cell nuclei have been formed, cell nuclei grow and cells are formed. The heating temperature is preferably 180 °C or higher and is more preferably 200 °C or higher.

If the heating temperature is lower than 150 °C, it may be difficult to obtain a porous structure having a high porosity. It should be noted that after the heating step, quenching the porous structure may be performed so as to prevent the growth of cells or to secure the cell shape.

The gas impregnation step and the foaming step may be performed by any of a batch method and a continuous method.

According to the batch system, the electrically insulating resin sheet (the porous structure) may be produced typically in the following manner. That is, a sheet containing a thermoplastic resin as a base resin is formed by extruding a thermoplastic resin composition comprising a thermoplastic resin through an extruder such as a single-screw extruder or twin-screw extruder.

Alternatively, a sheet containing a thermoplastic resin as a base resin is formed by uniformly kneading a thermoplastic resin composition comprising a thermoplastic resin in a kneading machine equipped with blades typically of roller, cam, kneader, or Banbury type; and press-forming the kneadate into a predetermined thickness using, for example, a hot-plate press. The resulting unexpanded sheet is placed in a pressure-tight vessel, into which a non-reactive gas composed of carbon dioxide, nitrogen, air, etc. is injected so that the non-reactive gas is impregnated into the unexpanded sheet.

At the time when the unexpanded sheet is sufficiently impregnated with the non-reactive gas, the unexpanded sheet is released from the pressure (the pressure is usually lowered to atmospheric pressure) to thereby generate cell nuclei in the base resin. Then, after allowing the cells to grow by heating the cell nuclei, the electrically insulating resin sheet is obtained by quenching with cold water to prevent the growth of cell and fix its shape.

According to the continuous system, for example, a non-reactive gas is injected while kneading a thermoplastic resin composition comprising a thermoplastic resin using an extruder such as a single-screw extruder or twin-screw extruder so that the non-reactive gas is sufficiently impregnated into the resin, and the resulting kneadate is extruded to release from the pressure (the pressure is usually lowered to atmospheric pressure), thereby to generate cell nuclei. Then, after allowing the cells to grow by heating the cell nuclei, the electrically insulating resin sheet is obtained by quenching with cold water to prevent the growth of cell and fix its shape.

Hereinafter, the method of extracting a phase separation agent that has been phase-separated in a resin mentioned above under item (2) will be described.

The electrically insulating resin sheet of the present invention can be produced by, for example, preparing a thermoplastic resin sheet having a microphase-separated structure by applying on a substrate a thermoplastic resin composition containing a thermoplastic resin and a phase separation agent that phase-separates from a cured body of the thermoplastic resin, followed by curing, and removing the phase separation agent from the thermoplastic resin sheet.

The phase separation agent constituting the discontinuous phase of the microphase-separated structure is compatible with the thermoplastic resin when mixed, and is a compound that phase-separates from a cured body of the thermoplastic resin. However, even in the case of a compound that phase-separates from the thermoplastic resin, such a compound can be used if it is brought to a homogenous state (a homogenous solution) by the addition of a suitable medium (for example, organic solvents) thereto.

Examples of such a phase separation agent include, for example, polyalkylene glycols such as polyethylene glycol and polypropylene glycol; those polyalkylene glycols terminated at one or each end by methyl or terminated at one or each end by (meth)acrylate; urethane prepolymers; and (meth)acrylate- based compounds such as phenoxypol-yethylene glycol (meth)acrylate, $\varepsilon$-caprolactone (meth)acrylate, trimethylolpropane tri(meth)acrylate, dipentaerythritol hexa(meth)acrylate, urethane (meth)acrylates, epoxy (meth)acrylates, and oligoester (meth)acrylates. These phase separation agents can be used alone or in combination of two or more thereof.

A fine microphase-separated structure can be formed by using the phase separation agent, thus making it possible to adjust the average cell diameter of the electrically insulating resin sheet to 10 μm or less.

The molecular weight of the phase separation agent is not particularly limited, but the weight average molecular weight is preferably 100 to 10,000, more preferably 100 to 2,000, from the viewpoint that later removal procedure becomes easy. If the weight average molecular weight is less than 100, phase separation of the phase separation agent from a cured body of the thermoplastic resin becomes difficult, whereas if the weight average molecular weight exceeds 10,000, microphase-separated structure becomes too large and it becomes difficult to remove the phase separation agent from the thermoplastic resin sheet.

It is necessary to appropriately adjust the added amount of the phase separation agent depending on the kind of the thermoplastic resin, but the phase separation agent may be used usually in an amount of preferably 10 to 200 parts by weight, and more preferably 10 to 100 parts by weight, per 100 parts by weight of the thermoplastic resin, in order to achieve a porosity of 10 % to 60 % in the electrically insulating resin sheet.

In addition, the added amount of the phase separation agent is usually preferably 10 to 80 parts by weight, and more preferably 10 to 75 parts by weight, per 100 parts by weight of the thermoplastic resin, in order to achieve an insulation breakdown voltage of 25 kV/mm or more in the electrically insulating resin sheet.

A method for producing an electrically insulating resin sheet by using a phase separation agent will be described in detail below.

First, a thermoplastic resin composition containing the thermoplastic resin and the phase separation agent is applied onto a substrate.

In order to prepare a uniform thermoplastic resin composition, organic solvents such as aromatic hydrocarbons (e.g. toluene and xylene); alcohols (e.g. methanol, ethanol, and isopropyl alcohol); ketones (e.g. methyl ethyl ketone and acetone); and amides (e.g. N-methyl-2-pyrrolidone, dimethylacetamide, and dimethylformamide) may be used. The amount of the organic solvent used is usually 100 to 500 parts by weight, preferably 200 to 500 parts by weight, per 100 parts by weight of the thermoplastic resin.

The base material is not particularly limited as long as it has a smooth surface, and includes, for example, plastic films, such as PET, PE, and PP; glass plates; and metal foils, such as stainless steel, copper, and aluminum. In order to produce the electrically insulating resin sheet continuously, a belt-like base material may be used.

The method for applying a thermoplastic resin composition onto a base material is not particularly limited, and a continuous coating method includes, for example, a wire bar method, a kiss coating method, and a gravure method. The method of coating in a batch system includes, for example, an applicator method, a wire bar method, and a knife coater method.

Next, a thermoplastic resin sheet wherein a phase separation agent is microphase separated is produced by curing a thermoplastic resin composition coated on a base material. The microphase-separated structure usually takes a sea-island structure wherein the resin component is regarded as a sea and the phase separation agent is regarded as an island.

When the thermoplastic resin composition does not contain a solvent, a curing treatment such as a thermal curing treatment is applied to the coated film to cure the thermoplastic resin in the coated film so that the phase separation agent is insolubilized.

When the thermoplastic resin composition contains a solvent, such a solvent in the coated film may be evaporated (dried) to form a microphase-separated structure and then the thermoplastic resin component may be cured. Alternatively, after the thermoplastic resin component is cured, the solvent may be evaporated (dried) to form a microphase-separated structure. The temperature during evaporation (drying) of the solvent is not particularly limited and may be appropriately adjusted depending on the type of solvents used, but it is usually 10°C to 250°C, preferably 60 °C to 200 °C.

Next, the electrically insulating resin sheet is prepared by removing the phase separation agent that has been microphase-separated from the thermoplastic resin sheet. In addition, the thermoplastic resin sheet may be previously peeled off from the base material before removing the phase separation agent.

The method to remove the phase separation agent from the thermoplastic resin sheet is not particularly limited, but includes preferably a method of extracting the phase separation agent with a solvent. It is necessary to use a solvent that is a good solvent for the phase separation agent and does not dissolve the cured body of the thermoplastic resin component, and includes, for example, organic solvents (e.g., toluene, ethanol, ethyl acetate, and heptane), liquefied carbon dioxide, subcritical carbon dioxide, and supercritical carbon dioxide. The liquefied carbon dioxide, subcritical carbon dioxide, and supercritical carbon dioxide can remove the phase separation agent efficiently because they can easily penetrate into the resin sheet.

In the case of using liquefied carbon dioxide, subcritical carbon dioxide, or supercritical carbon dioxide as a solvent, a pressure vessel is usually used. The pressure vessel that can be use includes, for example, a batch type pressure vessel and a pressure vessel provided with a pressure-resistant device for feeding and winding a sheet. The pressure vessel is usually provided with a carbon dioxide supply means constituted by pump, piping, and valve.

The temperature and pressure during the extraction of the phase separation agent with liquefied carbon dioxide, subcritical carbon dioxide or supercritical carbon dioxide may be equivalent to or higher than the critical point of carbon dioxide, and are usually 32 °C to 230 °C and 7.3 to 100 MPa, respectively, and preferably 40 °C to 200 °C and 10 to 50 MPa, respectively.

The extraction may be carried out by feeding/discharging continuously liquefied carbon dioxide, subcritical carbon dioxide or supercritical carbon dioxide into/from a pressure vessel in which the thermoplastic resin sheet is placed, or may be carried out in a pressure vessel in a closed system (in a state where the charged resin sheet, liquefied carbon dioxide, subcritical carbon dioxide, or supercritical carbon dioxide does not move to the outside of the vessel).

In the case of using supercritical carbon dioxide and subcritical carbon dioxide, swelling of the thermoplastic resin sheet is promoted and the diffusion coefficient of the insolubilized phase separation agent is improved, resulting in efficient removal of the phase separation agent from the thermoplastic resin sheet. In the case of using liquefied carbon dioxide, the diffusion coefficient decreases, but the phase separation agent is efficiently removed from the resin sheet because of improved permeability of the liquefied carbon dioxide to the thermoplastic resin sheet.

It is necessary to appropriately adjust the extraction time, depending on the temperature and pressure during extraction, the added amount of the phase separation agent, and the thickness of the resin sheet, but the extraction time is usually 1 to 10 hours, preferably 2 to 10 hours.

On the other hand, when extraction is carried out with an organic solvent as a solvent, the deformation of the electrically insulating resin sheet as compared with the case where extraction is performed with liquefied carbon dioxide or supercritical carbon dioxide can be suppressed because the phase separation agent can be removed at atmospheric pressure.

It is also possible to shorten the extraction time when an organic solvent is used for the extraction. Furthermore, it is possible to continuously perform an extraction treatment of the phase separation agent by passing the thermoplastic resin sheet sequentially in an organic solvent.

The extraction method using an organic solvent includes, for example, a method of immersing a thermoplastic resin sheet in an organic solvent, a method of spraying an organic solvent to a thermoplastic resin sheet, and the like. From the viewpoint of removal efficiency of the phase separation agent, such an immersing method is preferred. In addition, the phase separation agent can be removed efficiently by replacing an organic solvent over a few times or performing the extraction with stirring.

The porous structure may be subjected to drying treatment and the like after removing the phase separation agent.

In the present invention, when a phase separation agent that can be evaporated or decomposed by heating is used, a method of removing a phase separation agent by evaporation or decomposition through heating may be combined prior to the extraction. The heating temperature when the phase separation agent is evaporated or decomposed by heating is generally 100 °C or higher, for example, 100 °C to 500 °C, preferably about 250 °C to 450 °C, though it can be appropriately selected depending on the boiling point and decomposition point of the phase separation agent.

Evaporation and decomposition procedures are preferably performed under reduced pressure (for example, 1 mmHg or lower) in order to increase the removal efficiency of the phase separation agent. Since the evaporation procedure or the decomposition procedure and the extraction procedure are performed in combination, the residue of the additive, which cannot be removed by one procedure, can be completely removed by the other procedure, thereby to obtain a porous structure having a very low relative permittivity.

The electrically insulating resin sheet of the present invention has a porosity of 10 % to 60 %, a stress relaxation ratio of 20 % or more when the sheet is extended by 5 % at 23 °C and maintained for 10 minutes, and an insulation breakdown voltage of 25 kV/mm or more. The porosity is preferably 20 % to 55 %, and more preferably 30 % to 50 %. In addition, the stress relaxation ratio is preferably 30 % or more (usually 70 % or less, and preferably 50 % or less).

It should be noted that the stress relaxation ratio can be adjusted to an intended range by appropriately adjusting the resin to be used, the porosity, and the average cell diameter. Further, the insulation breakdown voltage is preferably 30 kV/mm or more (usually 100 kV/mm or less, and preferably 60 kV/mm or less).

In addition, the electrically insulating resin sheet of the present invention preferably has an average cell diameter of 10 $\mu$m or less, and more preferably 5 $\mu$m or less.

Further, the electrically insulating resin sheet of the present invention preferably has a relative permittivity of 2.5 or less, and more preferably 2.0 or less (usually 1.0 or more) at a frequency of 1 GHz. It should be noted that the relative permittivity depends on the relative permittivity peculiar to the raw material resin, but it is possible to lower the permittivity by increasing the porosity.

The electrically insulating resin sheet of the present invention preferably has a thickness of 60 $\mu$m to 500 $\mu$m, and more preferably 100 $\mu$m to 300 $\mu$m. If the thickness is in the range of 60 $\mu$m to 500 $\mu$m, excellent insulation characteristics can be maintained in an electrically insulating resin sheet for motors. If the thickness is less than 60 $\mu$m, insulation breakdown is likely to occur, and if the thickness exceeds 500 $\mu$m, the motor output tends to decrease due to the reduced number of turns of the coil wire.

An electrically insulating laminated resin sheet according to the present invention includes the electrically insulating resin sheet and a sheet material laminated on at least one surface of the electrically insulating resin sheet. There is no particular limitation to the shape of the electrically insulating laminated resin sheet, and such a sheet may be sheet-shaped or tape-shaped, or may be processed by stamping into an appropriate shape as needed, or may be subjected to a three-dimensional bending processing.

An arrangement of such a sheet material can impart strength and sliding property to the electrically insulating resin sheet.

Examples of the sheet material include a nonwoven fabric, paper, and a film, but in order to further improve heat resistance of the electrically insulating resin sheet, a nonwoven fabric, paper, or a heat-resistant film is preferably used.

The thickness of the sheet material is not particularly limited, and is usually 5 $\mu$m to 100 $\mu$m, preferably 5 $\mu$m to 50 $\mu$m. If the thickness of the sheet material is less than 5 $\mu$m, it tends to become difficult to impart strength to the electrically insulating resin sheet, and if the thickness of the sheet material exceeds 100 $\mu$m, the thickness as the electrically insulating laminated resin sheet is increased to result in the reduction of number of turns of the coil wire. Thereby it tends to cause malfunctions such as decreased motor output and difficulty in lowering the relative permittivity of the electrically insulating laminated resin sheet.

In order to laminate the sheet material to the electrically insulating resin sheet, an adhesive or a pressure-sensitive adhesive may be used. The adhesive or pressure-sensitive adhesive to be used is not particularly limited, and known ones can be used, and examples thereof include an epoxy adhesive, a urethane adhesive, and an acrylic adhesive.

Corona treatment can be applied to the laminated surface of the sheet material. By performing the corona treatment, delamination between the sheet material and the electrically insulating resin sheet can be suppressed.

EXAMPLES

The present invention will be described below by way of Examples, without intending to limit the present invention thereto in any way.

Measurement and Evaluation Method

Glass Transition Temperature of Thermoplastic Resin

Thermoplastic resin sheets were obtained by molding the thermoplastic resins used in examples and comparative examples into a sheet shape. Then, each of the thermoplastic resin sheet was cut into a sample of 5 mm $\times$ 80 mm. The viscoelasticity of the sample was measured in a tensile mode using a viscoelasticity tester (ARES manufactured by Rheometric Scientific F.E. Ltd.), while applying a tensile strain at a frequency of 1 Hz under the conditions of a temperature range of 70 °C to 230 °C and a temperature rising rate of 5 °C per minute, and the peak-top temperature of tan $\delta$ was defined as a glass transition temperature.

Tensile Stress at Break and Tensile Modulus of Thermoplastic Resin

Thermoplastic resin sheets were obtained by molding the thermoplastic resins used in examples and comparative examples into a sheet shape. Then, each of the thermoplastic resin sheets was cut into a sample of 25 mm (MD direction) $\times$ 150 mm. Then, in accordance with JIS K 7161, a tensile test was carried out under tensile conditions of a temperature of 23 °C, a tensile speed of 200 mm/minute, and a distance between grips of 50 mm to obtain a stress-strain curve. It should be noted that a slope between stresses 10 MPa and 20 MPa (a value obtained by dividing the difference of stress by the difference of strain) was defined as a tensile modulus (MPa).

Porosity

The specific gravity of a thermoplastic resin composition before foaming and the specific gravity of the prepared electrically insulating resin sheet were measured with a gravimeter ("MD-300S", manufactured by Alfa Mirage Co., Ltd.), and the porosity was calculated from the following equation: Porosity (%) = [1-(Specific gravity of electrically insulating resin sheet /Specific gravity of thermoplastic resin composition)] $\times$ 100

Stress Relaxation Ratio

The prepared electrically insulating resin sheet was cut into a sample of 15 mm (TD direction) $\times$ 150 mm. Then, in accordance with JIS K 7161, a tensile test was carried out under the following conditions. Specifically, the sample was extended to have a strain of 5 % under tensile conditions of a temperature of 23 °C, a tensile speed of 200 mm/minute, and a gauge line of 100 mm so that the load (initial stress) at that time was measured. The load (stress after relaxation) was also measured when the state was maintained for 10 minutes. The stress relaxation ratio was calculated by substituting the values of the obtained initial stress and stress after relaxation into the following equation:

$$\text{Stress relaxation ratio (\%)}$$
$$= \{(\text{Initial stress} - \text{Stress after relaxation})/\text{Initial stress}\} \times 100.$$

Insulation breakdown voltage

In accordance with JIS K 7161, the insulation breakdown voltage of the electrically insulating resin sheet prepared was measured under the condition of a pressure rising rate of 1 kV/second.

Average Cell Diameter

The prepared electrically insulating resin sheet was cooled with liquid nitrogen and cut perpendicularly to the sheet surface by using a knife to prepare an evaluation sample. The cut surface of the sample is subjected to Au vapor deposition and the cut surface was observed with a scanning electron microscope (SEM) ("S-3400N", manufactured by Hitachi, Ltd.).

Its image was binarized with an image processing software ("WinROOF", manufactured by Mitani Corp.) to separate into the cell portion and the resin portion, and the maximum vertical chord length of the cell was measured. Then, the cell diameters for 50 cells from those having a larger cell diameter were averaged and the average was determined as an average cell diameter.

Relative Permittivity

The relative permittivity was determined by measuring a complex permittivity at a frequency of 1 GHz by the cavity resonator perturbation method and defining its real part as the relative permittivity. A strip-shaped sample (sample size: 2 mm $\times$ 70 mm length) was used for the measurement with a measurement equipment such as a cylindrical cavity resonator ("Network Analyzer N5230C", manufactured by Agilent Technologies, Inc.; "Cavity Resonator 1GHz", manufactured by Kanto Electronic Application and Development Inc.).

Opening Angle

The electrically insulating resin sheet prepared was cut into a sample of 25 mm (MD direction) $\times$ 100. The central portion in the TD direction of the sample was pressurized in the thickness direction at 4 MPa for 5 seconds, and the sample was then bent by 180° along a direction orthogonal to the TD direction. After allowing the sample to stand for 3 hours, an opening angle (°) of the sample was measured from the side (a direction orthogonal to the TD direction and the thickness direction) of the sample, using a digital microscope (VHX-100, manufactured by KEYENCE Corporation) at 100 times magnification. It should be noted that if a cracking occurs in the sample during bending, such a sample was evaluated as "✕".

Attaching Property

The electrically insulating resin sheet prepared was cut into a sample of 25 mm (MD direction) $\times$ 100 mm. The central portion in the TD direction of the sample was pressurized in the thickness direction at 4 MPa for 5 seconds, and the sample was then bent by 180° along a direction orthogonal to the TD direction. After allowing the sample to stand for 3 hours, the sample was inserted from above in a metal plate that was bent by 30° as shown in Fig. 1 (shape that imitates the portion for attaching the electrically insulating resin sheet for motors). Ease of insertion at the time of insertion was evaluated by the following criteria.

○: Easy insertion is possible
✕: Necessary to hold the shape by hand at the time of insertion

Example 1

To a 1000 ml four-necked flask was added 667.7 g of N-methyl-2-pyrrolidone (NMP), and the flask was heated to 70 °C. Then, 250 g of a polyetherimide (PEI) resin (manufactured by SABIC Innovative Plastics, Ultem 1000, glass

transition temperature: 223 °C, tensile stress at break: 117 MPa, tensile modulus: 3138 MPa) was added thereto and the mixture was stirred for 5 hours to obtain a PEI resin solution.

Thirty parts by weight of polypropylene glycol having a weight average molecular weight of 400 per 100 parts by weight of the PEI resin was added to the prepared PEI resin solution, and the mixture was stirred to obtain a homogeneous clear solution. The homogeneous clear solution was applied onto a PET film by the comma direct manner and then the NMP was removed by evaporation under heating at 130 °C, for 8 minutes to obtain a phase-separated structure.

The obtained phase-separated structure was placed in a 30 L-pressure resistant vessel and carbon dioxide was injected thereto in an atmosphere of 45 °C. After being pressurized to 25 MPa, carbon dioxide was injected at a flow rate of about 1.8 kg/hour while maintaining the pressure, and the remaining solvent and polypropylene glycol were extracted by evacuation.

The extraction procedure was carried out until the total amount used of carbon dioxide reached 1.8 kg. Then, the atmospheric temperature was set to 85 °C, an amount of 7.2 kg of carbon dioxide was injected while rising the temperature, and the extraction procedure was carried out by evacuation, thereby to obtain an electrically insulating resin sheet made of a porous structure.

Example 2

An electrically insulating resin sheet was prepared in the same manner as in Example 1 except that 60 parts by weight of polypropylene glycol having a weight average molecular weight of 400 per 100 parts by weight of the PEI resin was added to the prepared PEI resin solution.

Example 3

To a 1000 ml four-necked flask was added 667.7 g of N-methyl-2-pyrrolidone (NMP), and the flask was heated to 70 °C. Then, 250 g of a polyethersulfone (PES) resin (manufactured by BASF, E2010, glass transition temperature: 225 °C, tensile stress at break: 68 MPa, tensile modulus: 2282 MPa) was added thereto and the mixture was stirred for 5 hours to obtain a PES resin solution.

Thirty-five parts by weight of polypropylene glycol having a weight average molecular weight of 400 per 100 parts by weight of the PES resin was added to the prepared PES resin solution, and the mixture was stirred to obtain a homogeneous clear solution. Then an electrically insulating resin sheet was prepared in the same manner as in Example 1.

Comparative Example 1

A polyetherimide (PEI) resin (manufactured by SABIC Innovative Plastics, Ultem 1000, glass transition temperature: 223 °C, tensile stress at break: 117 MPa, tensile modulus: 3138 MPa) was charged into a biaxial kneader (manufactured by TECHNOVEL CORPORATION), melted at 35 °C, and extruded to prepare an electrically insulating resin sheet.

Comparative Example 2

A polyethersulfone (PES) resin (manufactured by BASF, E2010, glass transition temperature: 225 °C, tensile stress at break: 68 MPa, tensile modulus: 2282 MPa) was charged into a biaxial kneader (manufactured by TECHNOVEL CORPORATION), melted at 310 °C, and extruded to prepare an electrically insulating resin sheet.

Comparative Example 3

An electrically insulating resin sheet was prepared in the same manner as in Example 1 except that 75 parts by weight of polypropylene glycol having a weight average molecular weight of 400 per 100 parts by weight of the PEI resin was added to the prepared PEI resin solution.

Comparative Example 4

An electrically insulating resin sheet was prepared in the same manner as in Example 1 except that 100 parts by weight of polypropylene glycol having a weight average molecular weight of 400 per 100 parts by weight of the PEI resin was added to the prepared PEI resin solution.

Table 1

| | | Example 1 | Example 2 | Example 3 | Comparative Example 1 | Comparative Example 2 | Comparative Example 3 | Comparative Example 4 |
|---|---|---|---|---|---|---|---|---|
| Resin | Kind | PEI | PEI | PES | PEI | PES | PEI | PEI |
| | Glass transition temperature (°C) | 223 | 223 | 225 | 223 | 225 | 223 | 223 |
| | Tensile stress at break (MPa) | 117 | 117 | 68 | 117 | 68 | 117 | 117 |
| | Tensile modulus (MPa) | 3138 | 3138 | 2282 | 3138 | 2282 | 3138 | 3138 |
| Sheet | Thickness ($\mu$m) | 153 | 191 | 188 | 193 | 186 | 183 | 198 |
| | Porosity (%) | 34 | 58 | 40 | - | - | 65 | 80 |
| | Stress relaxation ratio (%) ratio (%) | 30 | 35 | 37 | 28 | 18 | 35 | 40 |
| | Insulation breakdown voltage (kV/mm) | 31 | 37 | 34 | 68 | 74 | 23 | 19 |
| | Average cell diameter ($\mu$m) | 8.8 | 7.6 | 8.1 | - | - | 7.5 | 6.2 |
| | Relative permittivity | 2.4 | 1.4 | 1.7 | 3.0 | 3.4 | 1.3 3 | 1.2 |
| | Opening angle (°) | 24.1 | 20.3 | 24.7 | 42.8 | 39.0 | 18.2 | × |
| | Attaching property | ○ | ○ | ○ | × | × | ○ | × |

The electrically insulating resin sheets of Examples 1 to 3 were able to sufficiently maintain the bent shape even if an external force applied was removed. Therefore, such a resin sheet could easily be attached to a bent metal plate. In addition, the electrically insulating resin sheets of Examples 1 to 3 had a high insulation breakdown voltage and a sufficiently satisfactory insulating property. On the other hand, the electrically insulating resin sheets of Comparative Examples 1 and 2 had a non-porous structure and were not able to sufficiently maintain the bent shape when the external force was removed.

Therefore, when the resin sheet was attached to the bent metal plate, it was necessary to hold the bent shape by hand. Since the porosity of the electrically insulating resin sheet of Comparative Example 3 was high, the insulating breakdown voltage was low and the insulation property was poor. A crack occurred in the electrically insulating resin sheet of Comparative Example 4 at the time of bending because its porosity was very high.

INDUSTRIAL APPLICABILITY

The electrically insulating resin sheet of the present invention is used as an insulator. In particular, the electrically insulating resin sheet is suitably used as an insulator such as an insulator to the earth (slot, spacer, wedge, etc.) provided on equipments such as motors, generators, and transformers, an interlayer insulator (between coil layers, etc.), or a conductor insulator.

**Claims**

1.  An electrically insulating resin sheet having a porosity of 10 to 60 %, a stress relaxation ratio of 20 % or more when the sheet is extended by 5 % at 23 °C and maintained for 10 minutes, and an insulation breakdown voltage of 25 kV/mm or more.

2.  The electrically insulating resin sheet according to claim 1, which is a porous structure having an average cell diameter of 10 $\mu$m or less.

3.  The electrically insulating resin sheet according to claim 1 or 2, which has a relative permittivity of 2.5 or less at a frequency of 1 GHz.

4.  The electrically insulating resin sheet
    according to any one of claims 1 to 3,
    which includes a thermoplastic resin having a glass transition temperature of 150 °C or higher.

5.  The electrically insulating resin sheet according to claim 4, wherein the thermoplastic resin has a tensile stress at break of 50 MPa or more and a tensile modulus of 1000 MPa or more.

6.  The electrically insulating resin sheet according to claim 4 or 5, wherein the thermoplastic resin is polyetherimide, polyethersulfone or a mixture thereof.

7.  The electrically insulating resin sheet
    according to any one of claims 1 to 6,
    which is used as an electrical insulator for motor coils.

8.  An electrically insulating laminated sheet comprising the electrically insulating resin sheet according to any one of claims 1 to 7 and a sheet material laminated on at least one surface of the electrically insulating resin sheet.

FIG.1

30°

## INTERNATIONAL SEARCH REPORT

| | International application No. |
| --- | --- |
| | PCT/JP2013/055272 |

### A. CLASSIFICATION OF SUBJECT MATTER
*H01B17/56*(2006.01)i, *C08J9/26*(2006.01)i, *H01B3/30*(2006.01)i, *H01B3/42*
(2006.01)i, *H01B17/60*(2006.01)i

According to International Patent Classification (IPC) or to both national classification and IPC

### B. FIELDS SEARCHED

Minimum documentation searched (classification system followed by classification symbols)
H01B17/56, C08J9/26, H01B3/30, H01B3/42, H01B17/60

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2010-153121 A  (Nitto Shinko Co., Ltd.), 08 July 2010 (08.07.2010), claims 1, 2; paragraphs [0009], [0012] (Family: none) | 1-8 |
| A | JP 2010-153120 A  (Nitto Shinko Co., Ltd.), 08 July 2010 (08.07.2010), claims 1 to 3; paragraphs [0009], [0012] (Family: none) | 1-8 |
| A | JP 2011-198532 A  (Hitachi Maxell, Ltd.), 06 October 2011 (06.10.2011), paragraphs [0011], [0061], [0070], [0071] (Family: none) | 1-8 |

| | | |
| --- | --- | --- |
| [X] Further documents are listed in the continuation of Box C. | | ☐ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 April, 2013 (05.04.13) | 16 April, 2013 (16.04.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/055272

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-154936 A  (Hitachi Maxell, Ltd.), 11 August 2011 (11.08.2011), paragraphs [0011], [0036], [0110] (Family: none) | 1-8 |
| A | WO 2004/106419 A1  (Kureha Chemical Industry Co., Ltd.), 09 December 2004 (09.12.2004), entire text & JP 4913407 B         & US 2007/0057395 A1 & EP 1657277 A1        & CN 1829766 A & TWB 00I351309 | 1-8 |
| E,A | WO 2013/035652 A1  (Nitto Denko Corp.), 14 March 2013 (14.03.2013), claims 1 to 15 (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003009447 A